# EUROPEAN PATENT APPLICATION

(11) **EP 3 950 077 A1**
(43) Date of publication of application: **09.02.2022**
(21) Application number: 20777714.5
(22) Date of filing: 16.03.2020
(51) Int. Cl.: A63F 13/30, A63F 13/53, A63F 13/533, A63F 13/79, A63F 13/80

(54) **COMMUNICATION GAME SYSTEM AND THE LIKE**

(30) Priority: 27.03.2019 JP 2019061910
(71) Applicant: Kamiguchi, Takehide, Tokyo, 154-0012 (JP)
(72) Inventor: Kamiguchi, Takehide, Tokyo, 154-0012 (JP)
(74) Representative: Kilian Kilian & Partner
(86) International application number: PCT/JP2020/011547
(87) International publication number: WO 2020/196059

(57) **Abstract**

A communication game system includes a server and a plurality of terminals communicably connected to the server via a network. The terminals each includes a function for displaying plural choices (numerals) on a game screen G12 on a display of the terminal, and a function for notifying the server of selection information specifying a choice selected from the choices. The server includes a function for counting votes on each choice based on the selection information from the terminals and determining a winner such that: if a choice obtained one vote, the winner is a person who casted the vote; if no choice obtained one vote and a choice obtained no vote, no winner occurs; and if no choice obtained one vote and all the choices obtained two or more votes, the winner is those who voted on a choice with fewest votes. The determination result screen G15 displays the result.

## Description

### Technical Field

The present disclosure relates to a communication game system and the like.

### Background Art

Various communication systems have been developed, in which many unspecified users participate in a common field through a network to play a game following predetermined rules. One example is "the communication game system, recording medium, and program" disclosed in Patent Document 1.

### Citation List

### Patent Literature

[Patent Literature 1] Japanese Unexamined Patent Application Publication No. 2004-167172

### Summary of the Disclosure

### Technical Problem

Conventional communication game systems have been developed based on existing board games or games that were played on stand-alone home-use game consoles. Accordingly, there is a demand for unprecedented new games or creative games with new concepts.

In the case of the existing board games or home-use game consoles, users, i.e., players thereof are identifiable people who have gathered in a real space where such games are placed. Contrarily, in the case of playing communication game systems, users thereof do not need to gather at a place but can stay at remote places. The users may be many unspecified people. Although the users of the communication games are connected with each other through a network, it is difficult for them to actually feel it.

The above-described problems are independent from each other. The present disclosure does not necessarily have to be able to solve all the problems, but at least one of them. The inventor also has an intention of independently obtaining a right for configurations to solve the above-described problems by means of a divisional application, an amendment or the like.

### Solution to the Problem

(1) Provided are a server and a plurality of terminals communicably connected to the server via a network. Each of the terminals includes a function for displaying a plurality of choices on a display of the terminal, and a function for notifying the server of selection information specifying a choice selected from the plurality of choices. The server includes a function for counting votes on each of the choices based on the selection information sent from the terminals, and determining a winner based on counts of the votes. The choices are a combination of numerals. The server is configured to determine the winner based on the counts of the votes such that: if a choice obtained one vote, the winner is a person who casted the vote; if no choice obtained one vote and a choice obtained no vote, no winner occurs; and if no choice obtained one vote and all the choices obtained two or more votes, the winner is those who voted on a choice that obtained fewest votes.
(2) It is preferable to provide a function for displaying on the terminals information about participants who operate the terminals to participate in a game.
(3) It is preferred that the numerals of the choices are arranged and aligned in a same manner on all the terminals.
(4) It is preferred that the server is configured to perform a process of receiving votes for the choices for a voting period and repeat the process, and count the votes for each voting period to determine the winner.
(5) It is preferred that the choices are displayed on the terminals without any change in the combination of the numerals while the server repeats the process of receiving votes for the choices.
(6) It is preferred that the terminals each possess a bingo sheet in which the numerals are arranged, and the winner captures upon winning a game a square of the bingo sheet corresponding to a numeral that the winner selected from the choices and receives a bonus upon winning a game when the bingo sheet satisfies a predetermined condition.
(7) A storage medium of the disclosure is a storage medium storing a program that, when executed, causes a computer to implement the functions performed on the terminals of the communication game system according to any one of (1) to (6).

### Advantageous Effects of the Disclosure

The present disclosure provides an unprecedented new game or a creative game with new concepts.

### Brief Description of Drawings

FIG. 1 is an exemplary diagram showing a preferred embodiment of a communication game system according to the present disclosure.
FIG. 2 shows exemplary display screens displayed on a display of a terminal.
FIG. 3 is a flow chart for executing an easy mode game.
FIG. 4 is a screen transition diagram of the display screen displayed on the display of the terminal in an execution of the easy mode game.
FIG. 5 shows an exemplary display screen displayed on the display of the terminal.
FIG. 6 shows an exemplary display screen displayed on the display of the terminal.
FIG. 7 shows exemplary display screens displayed on the display of the terminal.
FIG. 8 shows exemplary display screens displayed on the display of the terminal.
FIG. 9 shows exemplary groups belonging to a room of animals.
FIG. 10 shows exemplary groups belonging to a room of cats.
FIG. 11 shows exemplary display screens displayed on the display of the terminal.
FIG. 12 shows exemplary groups belonging to a room of the sea.

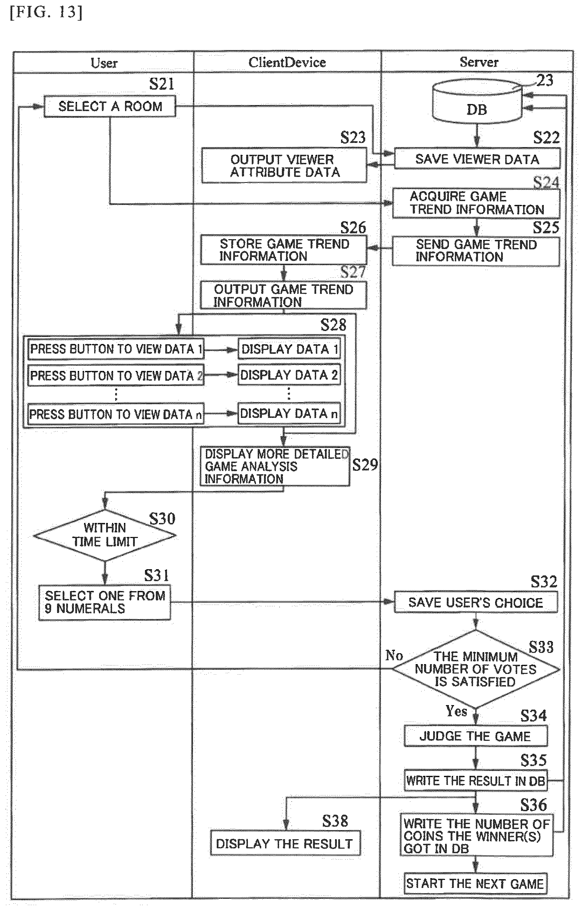

FIG. 13 is a flow chart for executing a hard mode game.
FIG. 14 is a screen transition diagram of the display screen displayed on the display of the terminal in an execution of the hard mode game.
FIG. 15 shows an exemplary display screen displayed on the display of the terminal.
FIG. 16 shows an exemplary display screen displayed on the display of the terminal.
FIG. 17 shows an exemplary display screen displayed on the display of the terminal.
FIG. 18 shows an exemplary display screen displayed on the display of the terminal.
FIG. 19 shows an exemplary display screen displayed on the display of the terminal.
FIG. 20 shows an exemplary display screen displayed on the display of the terminal.
FIG. 21 shows exemplary display screens displayed on the display of the terminal.
FIG. 22 shows an exemplary display screen displayed on the display of the terminal.
FIG. 23 shows an exemplary display screen displayed on the display of the terminal.
FIG. 24 shows an exemplary display screen displayed on the display of the terminal.

### Description of Embodiments

Hereinafter, preferred embodiments of the present disclosure will be described in detail with reference to the accompanying drawings. However, the present disclosure is not limited to such embodiments. Various modifications, alterations, and improvements may be made based on the knowledge of those skilled in the art without departing from the scope of the present disclosure.

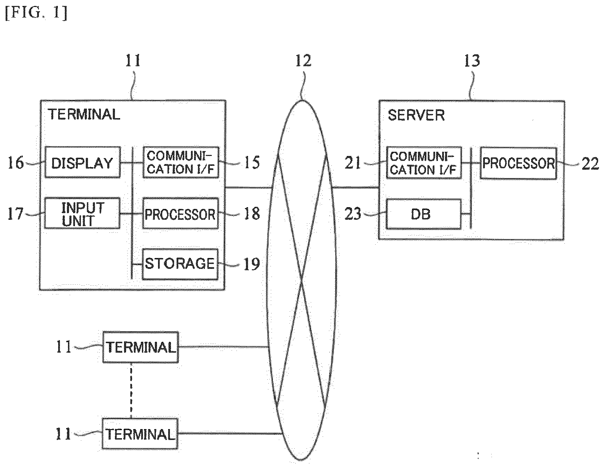

As shown in FIG. 1, a communication game system 10 of a present embodiment is configured such that a terminal 11 operated by a user can access a server 13 through a network 12. The network 12 may be suitably an Internet network, for example, but may be a public network or a dedicated line.

The terminal 11 includes a communication interface 15 configured to connect to the network 12 for communication, a display 16 configured to display predetermined information, an input unit 17, a processor 18, a storage 19 and the like. The terminal 11 may be a mobile terminal such as a smart phone, a tablet or the like. When such mobile terminal is used, the communication interface 15, the display 16, the input unit 17, the processor 18, and the storage 19 of the terminal 11 can be the ones provided in the mobile terminal as standard equipment. The input unit 17 may be a touch panel layered on the display 16, for example. The function for participating in games of the present embodiment is realized as an app. Installing the app in the terminal 11 enables the terminal 11 to execute the communication game system 10. When the app is installed, a program for executing a communication game, image data to be displayed as the game progresses and the like are stored in the storage 19.

The server 13 is a web server, for example. The server 13 works with a web browsing function known in the art equipped in the terminal 11 connected to the server 13 via the network 12 so as to display predetermined screens on the display 16 of the terminal 11 to proceed the game. Contrarily, the server 13 may not be a web server since many image data and the like are already stored in the storage 19 of the terminal 11 with the app installed in this embodiment. The server 13 may send information specifying image data and the like to be displayed, and the terminal 11 may receive the information and generate necessary screens to display them. The server 13 of the present embodiment includes a communication interface 21 configured to connect to the network 12 for communication, a processor 22, a user database 23 configured to store user information, and the like. The user database 23 stores identifiable information such as an ID and a nickname for uniquely identifying a user; user information such as gender, age, nationality, etc.; the number of coins owned by the user: a history of game play (e.g., the number of participations in games, the number of wins), and the like.

The name of the game operated in the communication game system 10 is "INNOVATORS WORLD". INNOVATORS WORLD is a game where participants predict an element which will not be selected by other participants from a plurality of elements displayed to win the game. INNOVATORS WORLD offers training for thinking differently from others (i.e., for becoming an innovator). The win or lose of the game is judged under a rule where a participant, i.e., a player in a game who selected an element which no other participants selected so as to be the only one person is a winner. If there is no such only one player, players who selected an element which obtained fewest votes are winners. For example, in a game to select one element from three elements (a, b, c), if two elements (e.g., a, b) each obtained one player while all other players selected the remaining element (e.g., c), both the players who selected a and b, respectively, are the winners. If no player selected an element (e.g., a) while the other elements (b, c) each obtained a plurality of players, there is not such only one player and there is no player who selected an element that obtained fewest votes (e.g., a), so all participants lose the game.

Hereinafter, functions of the terminal 11 and the server 13 will be further described while concretely explaining actions performed by a user. In the present embodiment, the terminal 11 is a smartphone with the app for executing "INNOVATORS WORLD" preinstalled. The user taps an icon of the app displayed on the display 16 of the terminal 11 (not shown). When the processor 18 of the terminal 11 detects the tap on the icon, the processor 18 activates INNOVATORS WORLD. As will be described later, prior to participating in a game, the user needs to initially register predetermined user information in the server 13. In this embodiment, each user has an ID and a nickname that uniquely identify the user among all users participating in INNOVATORS WORLD. Accordingly, the processor 18 stores, in the storage 19 of the terminal 11, the identifiable information identifying the user such as the nickname registered in the server 13 at an appropriate time during the initial registration.

When the processor 18 activates the app, the processor 18 checks whether the identifiable information such as the nickname is stored in the storage 19 to determine whether it is a first login. If the identifiable information is not stored, the processor 18 determines it is the first login.

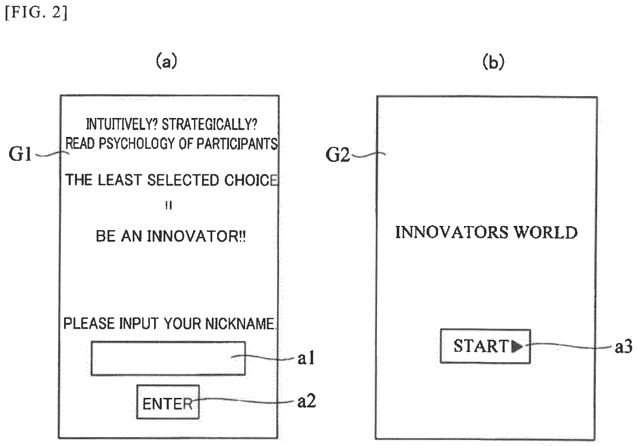

If it is the first login, the processor 18 of the terminal 11 displays a registration top screen G1 (see a screen on the left side in FIG. 2) on the display 16. Elements and the like constituting the registration top screen G1 and screens described below are stored in the storage 19 at the time of the installation of the app. The registration top screen G1 includes a message about the game, a nickname registration box a1, an ENTER button a2 and the like. The user operates the input unit of the terminal 11 to input a nickname desired for use in the nickname registration box a1, and taps the ENTER button a2. When the processor 18 of the terminal 11 detects the tap on the ENTER button a2, the processor 18 sends the nickname input in the nickname registration box a1 to the server 13.

When the processor 22 of the server 13 receives the information such as the nickname, the processor 22 registers the information about the user in the user database 23. Specifically, the processor 22 of the server 13 communicates with the processor 18 of the terminal 11 to display an input screen, an explanation screen and the like necessary for the registration of the user information on the display of the terminal 11, acquire necessary information, and store it. An initial value of the number of coins owned by a user is 0. Although concrete description of the procedure will be omitted, the terminal 11 and the server 13 communicate with each other, and the user inputs information necessary for initial registration using the initial registration screen displayed on the display 16 of the terminal 11. The terminal 11 then sends the input data to the server 13 to execute the initial registration.

When such initial registration is complete or the login is not an initial login, the terminal 11 displays a title screen G2 (see a screen on the right side in FIG. 2) on the display 16. The title screen G2 includes a start button a3. When the processor 18 of the terminal 11 detects the tap on the start button a3, the processor 18 displays a game mode selection screen (not shown) on the display 16 of the terminal 11. In this embodiment, the game mode includes two modes, i.e., an easy mode and a hard mode.

The user operates on the game mode selection screen displayed to select a mode to play. The terminal 11 displays, on the display 16 of the terminal 11, a top screen of the mode selected on the mode selection screen .

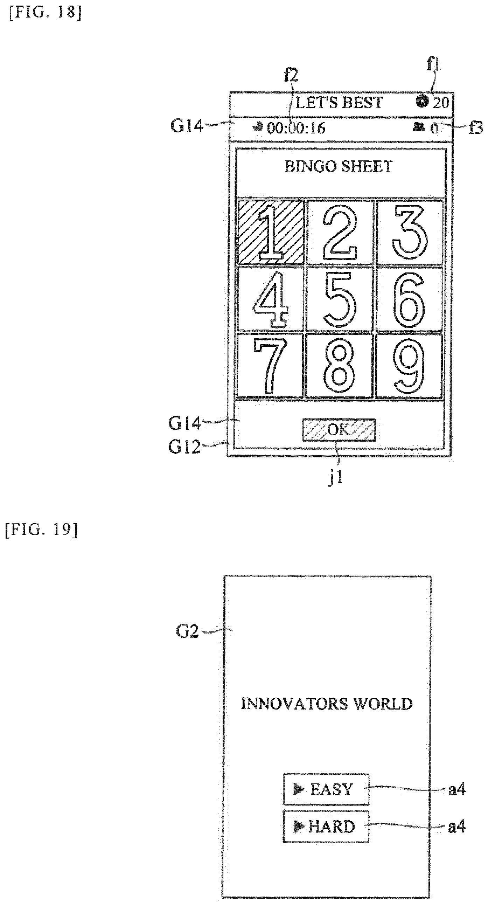

In the present embodiment, tapping the start button a3 of the title screen G2 shown in FIG. 2 displays the game mode selection screen, but the configuration is not limited thereto. As will be described later, the present system includes a function on the top screen of each game mode for switching to the other mode screen. Accordingly, when the start button a3 is tapped, the screen may transition to a preset game mode (e.g., the easy mode). This configuration can reduce the number of operations necessary to start a game for a user who wishes to play the preset game mode. Since the game mode can be switched to the other mode on the top screen of each game mode, the number of operations necessary to start a game for a user who does not wish to play the preset game mode is the same as in the case where the user selects a game mode via the game mode selection screen. Further, instead of the title screen G2 shown in FIG. 2, a screen with mode selection buttons a4 as shown in FIG. 19 may be displayed, for example.

The easy mode is a mode for playing by predicting a least selected choice from the predetermined number of choices (e.g., three or five). As will be described later, the choices are images representing elements belonging to a common category group. Images belonging to the same category may suitably give different impressions or the like so as to differentiate the possibilities of the images of being selected. Easy mode games can be played free of charge (i.e., without consuming any coin), and the winner gets three coins. The coins thus obtained are used to play a hard mode game, for example.

The hard mode is a mode for playing by predicting a least selected numeral from nine numerals. In the hard mode, the prediction is more difficult since the number of choices is greater than that in the easy mode, and the possibilities of the numerals of being selected vary less as compared with the images constituting the choices in the easy mode. A hard mode game consumes three coins per play (per vote), and the winner gets a predetermined number of coins. The user bets three coins to play.

The coins used to bet are coins that the user got when the user participated and won in the easy mode, for example. As described above, no coin is required to play easy mode games. The user can repeatedly participate in easy mode games free of charge and save coins. It is preferable to provide a function allowing users to get coins by clicking a banner displayed in a screen in the communication game system to display an advertisement linked to the banner. For example, it is preferred that the server has a function of counting the number of clicks, registering the count in the user database 23, and giving three coins in exchange for M clicks (M is an integer of 1 or more). This exchange may be performed automatically or based on an instruction from a user. Further, it is preferable to provide a function allowing users to get coins by charging.

### [Easy Mode]

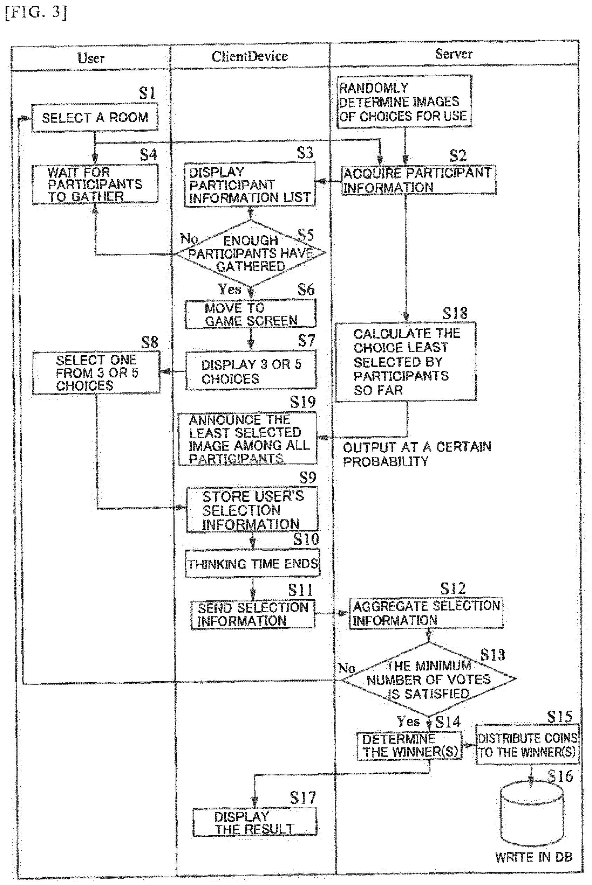

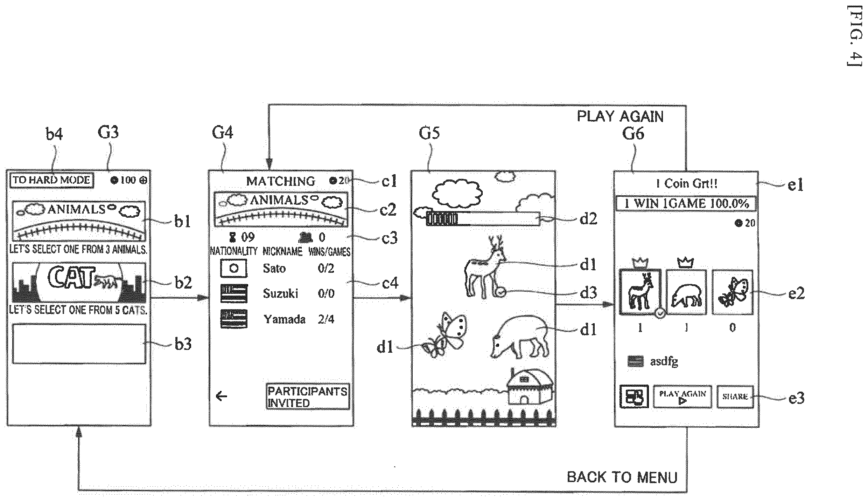

When the easy mode is selected, the terminal 11 and the server 13 transmit data to each other and execute a flow chart shown in FIG. 3 to proceed a game. FIG. 4 is a state transition diagram showing screens displayed on the display 16 of the terminal 11 as the game progresses.

When the easy mode is selected, the terminal 11 displays an easy mode top screen G3 on the display 16. The easy mode top screen G3 has a layout where a first game selection area b1, a second game selection area b2, and a third game selection area b3 are positioned in this order from the top. In the example shown, the first game selection area b1 is assigned with an icon for selecting a "game with three choices of animal category"; the second game selection area b2 is assigned with an icon for selecting "a game with five choices of cat category"; and the third game selection area b3 is not assigned with a game. Although the present embodiment has three game selection areas, four or more game selection areas may be provided. If one screen cannot display those areas simultaneously, the screen may be scrolled to display the areas, for example.

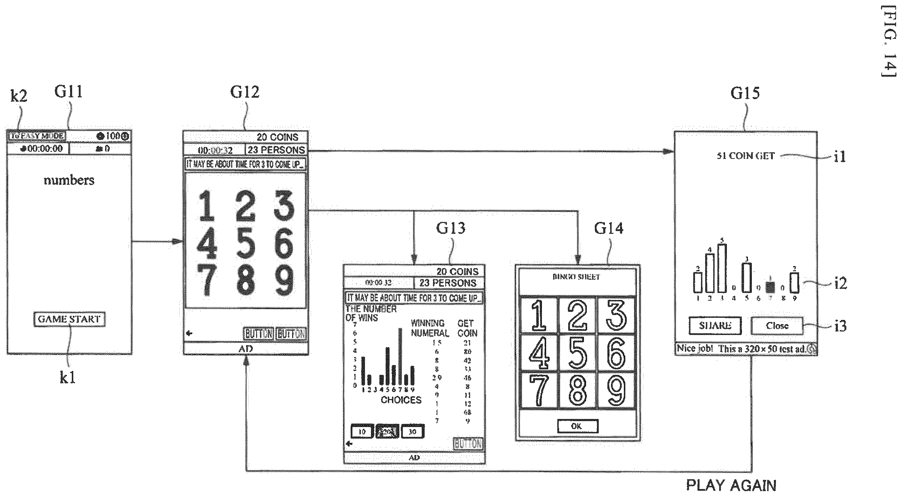

In addition, the easy mode top screen G3 has a mode switch button b4 in the vicinity of an upper end of the display screen. When the mode switch button b4 is tapped, the terminal 11 switches the game mode to play and displays the hard mode top screen G11 on the display 16 (see FIG. 14).

A user taps a desired game selection area displayed on the display 16 to select a game room (S1). The terminal 11 recognizes the tapped game selection area and notifies the server 13 of the selected game type together with a nickname, for example. The server 13 acquires participant information including identifiable information specifying the notified user, and registers the user as a participant in the notified game room (S2). The participant information thus acquired may include the nationality, nickname, and game results (the number of participations in games and the number of wins) of the participant. The processor 22 of the server 13 accesses the user database 23 using, for example, the acquired nickname as a key, and acquires the nationality, the game results and the like. The server 13 executes the processing of S2 to register the participant, thereby updating a participant list of the game room. When a first participant enters a game room, the processor 22 of the server 13 starts a wait time. The wait time may be, for example, 15 seconds. Specifically, in the present embodiment, when a participant enters a game room having no participant on standby, a participant group is created to match to participants subsequently entering the game room during the wait time. As will be described later, when the wait time has elapsed so that an actual voting period of the game starts among the matched participants, the number of participants in the game room returns zero. Thus, if a participant enters the game room while the game actually progresses, another participant group is created to wait for other participants.

At the time of registration to the game room, the terminal 11 acquires the current participant list possessed by the server 13. The terminal 11 displays a participant information screen G4 on the display 16 based on the acquired information (S3). The participant information screen G4 includes a first display area c1, a second display area c2, a third display area c3, and a fourth display area c4 in this order from the top of the display screen. The first display area c1 displays a title at the middle ("MATCHING" in the example shown) and the number of coins owned by the user at the right end ("20" in the example shown). The second display area c2 displays an image indicating the game in which the user is participating. The third display area c3 displays information about the remaining time of the wait time on the left side (an icon and the remaining time, i.e., "09" seconds in the example shown), and information about the number of participants on the right side (an icon and the number of participants, i.e., "3 persons" in the example shown). The fourth display area c4 displays, based on the acquired participant list, participant information as a list (the nationality, nickname, and game results) of each participant registered in the game room.

The terminal 11 also acquires information about the remaining time of the wait time at the time of registration to the game room. Based on the acquired information, the remaining time of the wait time is appropriately numerically displayed on the left side in the third display area c3 on the participant information screen G4. The terminal 11 appropriately updates the indication of the remaining time of the wait time based on an internal clock, timer or the like. For example, when the terminal 11 has an internal timer, the acquired remaining time of the wait time is set to this timer, and the timer is started. The timer decreases its value towards zero as time passes. The processor 18 of the terminal 11 displays the value of the timer in a predetermined position on the left side in the third display area c3.

After the registration to the game room, the terminal 11 periodically acquires the participant list or the like of the game room in which it is participating from the server 13 and updates the participant information screen G4 displayed on the display 16 based on the acquired information. Alternatively to the configuration where the terminal 11 periodically makes access, the server 13 may send a list of the participant information or participant information of a new participant to a predetermined terminal 11 when the new participant comes to the game room in which the terminal 11 is participating, so that the terminal 11 acquires the participant information and displays it as a list.

As described above, the terminal 11 executes the processing step S3 periodically to display, on the fourth display area c4, the participant list of already registered participants of a game room at the time when the user selects the game room; and to display the participant list including a newly registered participant of the game room when the new participant enters the game room during the subsequent wait time.

After the user becomes a registered participant of the game room, the user waits for a predetermined number or more of participants to gather in the game room (S4).

The terminal 11 also waits until the number of registered participants of the game room satisfies a condition to start the game (S5). The game start condition may be, for example, that the number of participants has reached the minimum number of participants when the wait time elapses. For example, in the case that the wait time is 15 seconds and the minimum number of participants is 4 persons, each terminal 11 determines whether enough participants have gathered based on the information displayed in the third display area c3 (the remaining time and the number of participants). The elapse of the wait time may be determined, for example, by the fact that the internal timer reaches 0. In such configuration, the user needs to wait until the wait time elapses. Accordingly, the firstly registered user necessarily waits for the whole wait time (for example, 15 seconds), and the user who got registered during the wait time needs to wait for the remaining time.

Alternatively to the configuration where the users must wait until the whole wait time elapses, the game may start before the elapse of the wait time at any time when the number of participants reaches or exceeds a predetermined reference value. The predetermined reference value is a number greater than the minimum number of participants. This preferably allows a game to start before the elapse of the wait time so that the users can play with less wait time if many participants enter the game at the same time. On the other hand, if the number of participants of the game is too small, the game might be less interesting. Hence, if the number of participants does not reach the minimum number of participants at the end of the wait time, the game may not be established. Incidentally, the game may be started when the wait time has elapsed regardless of the number of participants.

When the participants have gathered, the terminal 11 moves to the game screen (S6). Before displaying the game screen G5 where the user finally selects one from the choices, the terminal displays a screen indicating a transition to the game screen G5. This transition screen may display a countdown, for example, "3", "2", "1" such that a user can be mentally prepared for a display of a predetermined number of choices.

Next, the terminal 11 displays the game screen G5 in which the predetermined number (three or five) of choices are disposed at predetermined positions (S7). The server 13 determines which image group of the predetermined number of choices is to be displayed when the first participant is registered in this game room. The details of the determination process will be described later.

Information about the determined image group is acquired by each terminal 11 together with the participant information list when the terminal 11 accesses the server 13 to register its participation in the game room. The server 13 also determines a background screen to be used with the image group on the game screen G5, and sends information specifying the background screen to be used to the terminal 11 together with the information of the image group. When the wait time ends, the terminal 11 reads out and combines the images of the elements of the choices and the background screen stored in the storage 19 of the terminal 11 based on the image group information already acquired so as to generate a game screen and display it on the display 16.

The game screen G5 has a layout where the background screen is displayed on the entire screen; the predetermined number of choices d1 (three choices in the example shown in FIG. 3) are superimposedly displayed on the background screen at positions of the vertices of a triangle; and an indicator d2 is superimposedly displayed on the background screen at an upper position on the screen. The game screen G5 is the same on all the terminals 11 participating in a game. Namely, the background screen and the images constituting the image group to be displayed on the game screen G5, and the display positions of the images are the same for all terminals.

The example shown is the "game with three choices of animal category", in which images of three elements of animals are displayed as the choices d1 (a "wild boar", a "deer", and a "butterfly" in the example shown). The indicator d2 is for displaying the remaining time for the user to think and select one choice. Such time for thinking may be as short as 10 seconds, for example. Setting the time short can develop the user's intuition ability for intuitively determining an element which is least likely to be selected by the users. From another point of view, since the time necessary to play one game is short, the users can play many times. Especially in easy mode games where the users can play free of coins, the users can repeatedly play in a short period of time to strengthen the intuition ability while increasing the number of wins to effectively save coins.

The user selects one from the three or five choices d1 displayed on the game screen G5 (S8). For example, the user may select a choice d1 by tapping the image of the element of the choice d1 displayed on the screen.

After the thinking time is started on the game screen, the terminal 11 gradually changes the indication of the indicator d2 as the time passes. When the terminal 11 detects a tap on any of the displayed choices d1, the terminal 11 recognizes the element selected by the user from the position of the tap. The terminal 11 then displays a check mark d3 in the vicinity of the selected choice d1, and stores information about the selection. When the thinking time ends (S10), the terminal 11 sends the stored selection information to the server 13 (S11).

The server 13 aggregates the selection information sent from each terminal 11 participating in the game (S12). The server 13 determines whether the number of pieces of selection information sent thereto, i.e., the number of votes satisfies the minimum number of votes (S13). If a participant in the game room does not actually tap to select, no selection information occurs. The terminal 11 sends information to the effect that "the participant did not vote". Accordingly, the number of actual voters may be smaller than the number of participants at the start of the game. If the number of actual voters does not reach the minimum number of votes (No in S13), this game is not established, and the game room is closed once. Then, the process returns to the processing step S1, where the terminal 11 displays the easy mode top screen G3, and the user selects a room again. The minimum number of votes may be the same as the minimum number of participants in the processing step S5, for example.

On the other hand, when the number of actual voters satisfies the minimum number of votes, the server 13 calculates the number of participants for each choice of the three or five choices, and determines the winner (S14). Specifically, if only one user voted on a choice, the server 13 determines that this user is the winner. If a plurality of choices each obtained one vote, all the users who voted on these choices are the winners. If a choice obtained no vote, no winner occurs. If all the choices obtained a plurality of votes, the winners are the users who selected a choice that obtained fewest votes.

Based on the determination result of the winner (including the determination of "no winner"), the processor 22 of the server 13 distributes coins to the winner(s) (S15). Specifically, the number of coins owned by each winning user which is recorded in the user database 23 is incremented by one (S16).

The server 13 sends the determination result to the terminals 11. The terminal 11 acquires the determination result from the server 13 and displays it on a determination result screen G6 (S17). The determination result screen G6 has a layout where a winner's prize display section e1 is disposed on the upper side, a voting result display section e2 is disposed at a middle position, and an operation button e3 is disposed on the lower side. On the winning user's terminal 11, the winner's prize display section e1 notifies that the user got one coin as the winnings. On the losing user's terminal 11, the winner's prize display section e1 is blank.

In the voting result display section e2, the images of the choices are aligned; the number of votes for each choice is displayed under the choice; and a winner mark indicating the win is displayed above the choice selected by the winner. In this embodiment, the winner mark is a picture like a crown. In addition, a selected element notifier is displayed such that the user can see which choice he/she selected. In this embodiment, the selected element notifier includes a frame in a predetermined color (e.g., red) surrounding the perimeter of an image, and a check mark. Further, the number of votes is also displayed in a different color (e.g., red). These various and different ways of notification enable each user to easily confirm the element of the user's choice and to intuitively understand whether he/she won or lost. In the example shown, the "deer" and the "wild boar" each obtained one vote, so that the two voters are the winners. As shown in the participant information screen G4, the number of participants is three. Hence, it can be understood that one participant did not vote and the final number of voters was two. For convenience of illustration, this example has three participants and two voters. In actual games, it is preferred that the minimum number of participants and the minimum number of votes are set to a larger number (e.g., four or more persons); and the game is set such that three participants are not enough to start the game and two persons are not enough to reach the minimum number of votes.

In the present embodiment, the operation button e3 comprises three buttons. The menu button on the left is for returning to the easy mode top screen G3, allowing the user to play different games. "PLAYAGAIN" button at the middle is for playing the same game once more. When the terminal 11 detects a tap on this button, the terminal 11 displays the participant information screen G4.

Further, in the easy mode, it is preferable to configure so as to allow users to reselect a choice d1. The easy mode is intended to be relatively simple and easy for beginners to play, so that the users may often make a selection intuitively without deliberation. Such user may change his/her mind after having made the selection. Hence, it is preferable to provide a function for reselecting a choice d1 in the manner as described above. For example, as the function for reselection, the lastly tapped choice is recognized as the finally selected choice and the final choice is stored as the selection information. Alternatively, the reselection function may be configured such that the user is required to cancel the selection before making a new selection in order to clearly indicate the user's intention of reselecting a choice. However, preferred is the configuration in which multiple selections (i.e., taps) are allowed and the element of the lastly tapped image is recognized as the final choice, since such configuration can simplify the user's operation. In particular, since the thinking time is as short as, for example, 10 seconds, if the user needs to do a cancel operation, the wait time may elapse before the user reselects to participate the game. Validating the lastly tapped choice can preferably solve such problem.

As described above, when the user executes the processing step S9 and taps a choice, the terminal 11 stores the selection information that identifies the element of the tapped choice. Then, the terminal 11 displays the check mark d3 in the vicinity of the element of the choice, i.e., the "deer" in the example shown. If the user does not tap the screen thereafter, the terminal 11 sends the "deer" as the selection information when the wait time ends since the terminal 11 stores such selection information. On the other hand, if another element, such as the "butterfly" or the "wild boar", is tapped in the state where the "deer" is selected, the selection information is rewritten to the newly tapped element (the "butterfly" or the "wild boar").

Additionally, the present embodiment also includes a function for providing the users with information for selecting a choice during the thinking time. The information for selecting a choice may be, for example, a notification of the element of the least selected choice so far.

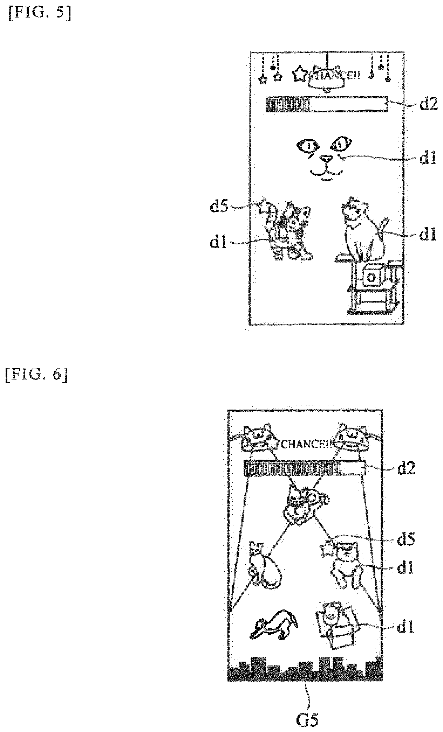

For example, such notification of the element of the currently least selected choice may be an indication of a predetermined chance mark d5 (e.g., a star mark) in the vicinity of the image of such element as shown in FIG. 5. The star may be partially overlapped with the image. Such notification of the element of the least selected choice is concurrently sent to the terminals of all the users participating in the game.

The least selected choice is determined in a manner that: after selecting the predetermined number of choices, the server 13 acquires, from each terminal 11, the number of votes that the participant voted in the past on each element of the predetermined number of choices; and aggregates them. Namely, the terminal 11 stores voting history information of each element of choices. Each time when the terminal 11 sends the selection information in the processing step S11, the terminal executes a process of adding one to the accumulated number of votes of the corresponding element, for example. When the terminal 11 acquires the information about the elements of the predetermined number of choices to be used in the ongoing game from the server 13, the terminal 11 sends the accumulated number of votes of each element.

When the wait time ends, the server 13 determines a choice least selected by the current participants among the images, i.e., the elements of the choices constituting the image group, based on the information about the number of votes acquired from each terminal 11 (S18). Then, the server 13 sends information specifying the least selected choice determined to the terminals 11.

Based on the received information specifying the least selected choice, the terminal 11 generates a screen in which the chance mark d5 such as a star is added in the vicinity of the image of the least selected choice and displays the screen on the display 16 (S19).

Notifying the element of the least selected choice may make such choice more noticeable and more likely to be selected, or may induce the users to outsmart and select another choice. Accordingly, the users may make deductions beyond simple intuition, so that the game may become more atmospheric. In the notification of the element of the least selected choice, it is preferred that such element is displayed in an eye-catching manner. Such eye-catching element can draw the users' attention, so that the notification can be useful information for making a selection.

The notification of the element of the least selected choice may be performed periodically, for example once every two games, or may be performed every time. Preferably, the notification may be performed at random. Further, the notification of the element of the least selected choice may not be performed at the start of the thinking time. Preferably, the notification (i.e., the display of the chance mark d5) may be performed in the middle of the time limit. For example, the chance mark d5 may preferably be displayed when one-third of the time limit has passed and remain displayed until the end of the time limit.

Displaying the chance mark d5 in the middle of the time limit may make a user, who was going to select a certain choice without the least selected choice information, feel hesitant about simply completing the initial selection because of the newly added information, thereby increasing unpredictability and amusingness of the game. For example, in the case of a participant who has voted intuitively at an early stage after the game started, if the participant notices the least popular choice in the middle of the time, it may make the participant dither over whether to keep or reselect the choice, thereby preferably approaching the correct answer. In other words, performing the notification in the middle of the time can make participants dither again.

If the element of the least selected choice is arranged to be notified at random in the middle of the thinking time as described above, the participant immediately after the start of the game cannot know whether such notification of the element of the least selected choice will be given in the ongoing game. Hence, the participant may think about the choices while being concerned with whether such notification will come, thereby increasing thrills and amusingness of the game.

As for displaying the chance mark d5 such as a star, if a plurality of elements among the three or five elements obtained the same accumulated number of votes, the chance mark d5 may be displayed on all the elements. However, it is preferred that no chance mark d5 is displayed in such a case. Especially in the case of three choices, if two elements of the choices obtained the same accumulated number of votes; and the chance marks d5 such as a star are displayed on both the two elements, the remaining element with no chance mark may become the most noticeable. Accordingly, it is preferred that no chance mark d5 is displayed in such a case. The chance mark d5 may preferably be displayed at different frequency and probability in accordance with the participants' experience (i.e., the number of plays).

In the embodiment described above, the least selected choice is notified. Alternatively, a least selected position among the positions where the images are displayed, for example, the vertexes of a triangle, may be notified.

When the second game selection area b2 is tapped on the easy mode top screen G3 (SI in FIG. 3), the communication game system executes the process flow shown in FIG. 3. The terminal 11 displays the participant information screen G4 on the display 16 as the process proceeds, and displays the game screen G5 when the game is started. The game associated with the second game selection area b2 is a "game with five choices of cat category". The processor 22 of the server 13 executes the processing step S6, extracts images of elements of five choices belonging to the cat category, and determines an image group. Then, the processor 22 of the server 13 generates a game screen in which the extracted images of the elements are disposed at predetermined appearance positions on the background screen (lower right, lower left, middle right, middle left, and top) as shown in FIG. 6, for example. The terminal 11 displays this game screen G5 on the display 16. In the example shown, the chance mark d5 is also displayed.

If the number of participants is smaller than the minimum number of participants when the wait time for waiting for participants elapses after the registration to a game room, the game may not be established. However, it is preferred that the server is counted as a participant to start the game. The server participant selects a choice at random and performs the above-described processing to determine the winner. Preferably, such configuration can prevent a failure in establishing a game due to the insufficient number of participants, and enable the users registered in the game room to definitely play the game.

Next, the processing step S6 will be described concretely. As described above, the present embodiment includes three-choice games in "the room of animals" corresponding to the first game selection area b1 and five-choice games in "the room of cats" corresponding to the second game selection area b2. For the three-choice games in "the room of animals", a plurality of groups each consisting of three fixed images which are relevant to each other are prepared. The server 13 randomly selects one group and randomly determines the positions of the three images belonging to the selected group. The servers 13 also determines which background image is to be used. The server 13 then informs the terminal 11 of the number assigned to the selected group and information about the positions where the images are to be placed. The terminal 11 generates the game screen G5 based on the information acquired from the server 13.

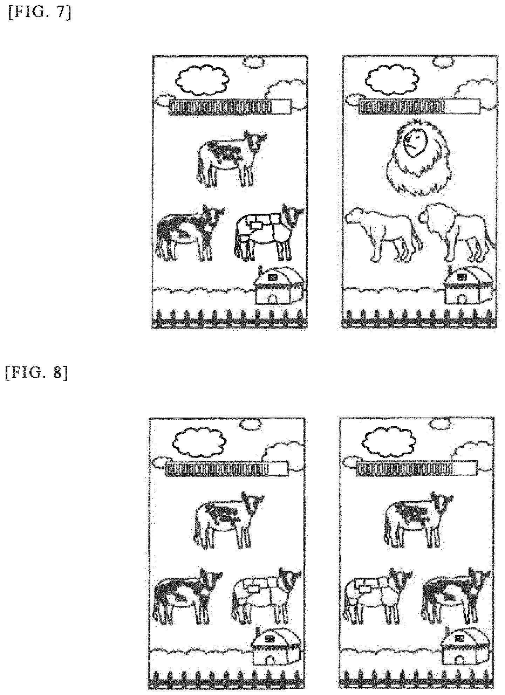

Thus, the images of the choices to be displayed together are fixed on a group-by-group basis. For example, as shown in FIG. 7, the communication game system selects and displays a group of "cows" or a group of "lions". Since the choices are determined on the group-by-group basis, a cow and a lion, which belong to different groups, are never selected in one image group, for example. If images belonging to irrelevant groups are contained in one game, the voting results may vary depending on the participants' feelings such as preferences as to the groups. However, such influence from the participants' preferences can be preferably removed by grouping relevant images together.

In addition, even in the case that the same group is selected, the display positions of the images are randomly set, so that the three images of cows may be displayed at different positions as shown in FIG. 8. Accordingly, even in the case of a user who repeatedly participates in games, the user needs to check the display positions each time, so that the user can play the game with a fresh feeling without getting bored. Further, the background image is also selected from a plurality of background images. Even when the same group is selected, the background screen of the images may be different. Accordingly, the atmosphere of the images of the choices is also changed, which can be one factor in considering which image is to be selected.

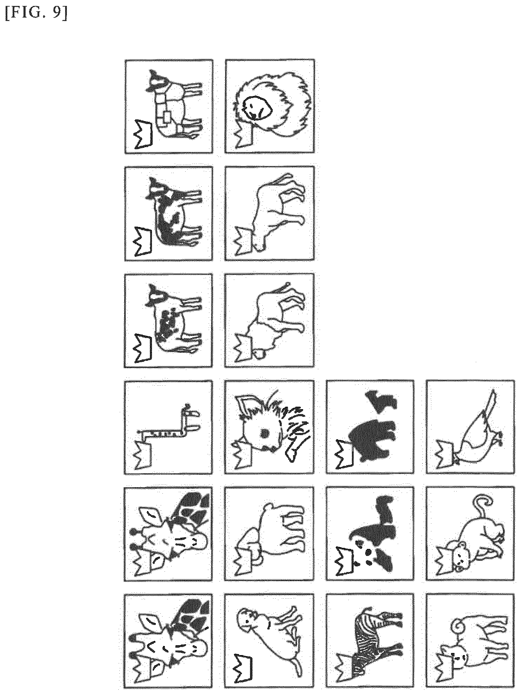

FIG. 9 shows exemplary groups belonging to the room of animals. In FIG. 9, every three images in horizontal rows constitute a group to appear on the game screen. The elements of the choices of a group are specified by, for example, a number assigned to the group and an element number (1, 2, 3, etc.) assigned to the images in the group. Accordingly, when the server 13 sends the terminal 11 a group of images to be used in an ongoing game, the server 13 can easily notify it by using the group number and the element numbers of the images to be respectively placed on the appearance positions (i.e., right, left, and top), for example. In the case of the element numbers "2, 1, 3", it may mean that the element "2" is placed on the right position, the element "1" on the left position, and the element "3" on the top position, for example.

As shown in FIG. 9, the three relevant images constituting a group may be animals of the same kind or species such as "giraffes", "dogs" or "lions"; animals having black-and-white coat such as "a zebra, a giant panda and a tapir"; or animals which are characters in a fairy tale such as "a dog, a monkey and a pheasant in the fairy tale called Momotaro", for example. In the case of animals of the same kind or species, it is preferred that two images are similar to each other and the remaining image is extremely different from the two images. For example, in the case of "giraffes", the two images show close-up faces of giraffes which have a slight difference in horns while the third image shows a full body of a giraffe which is deformed with a comic touch. In the case of "dogs" or "lions", the first and second images are full body images, and the third image is a close-up image of a face. In the case of "cows", the first and second images shows ordinary cows with white and black patchy patterns while the third image shows a cow with labyrinth-like pattern on its torso.

For example, in the case of animals belonging to the same species, if the three images look similar to each other or are completely different from each other in concept, the three images are likely to be selected with similar probabilities as in the case of selecting from numerals. On the other hand, if two images are similar to each other and one image is strange or eccentric as in the present embodiment, the one image becomes noticeable. Accordingly, the participants might feel like selecting that noticeable image. In such a situation, if all such participants actually select the noticeable image, many votes will be casted on that choice, so that some participants may try to outsmart the others by selecting another choice or some participants may dare to select the noticeable image with an expectation that other participants will select an image other than the noticeable one. Such deductions can make the game more excited. If participants try to outsmart and select another image, the participants need to select one from the two similar images, so that votes will be divided between the two images. Thus, the games preferably have three choices rather than four or five choices.

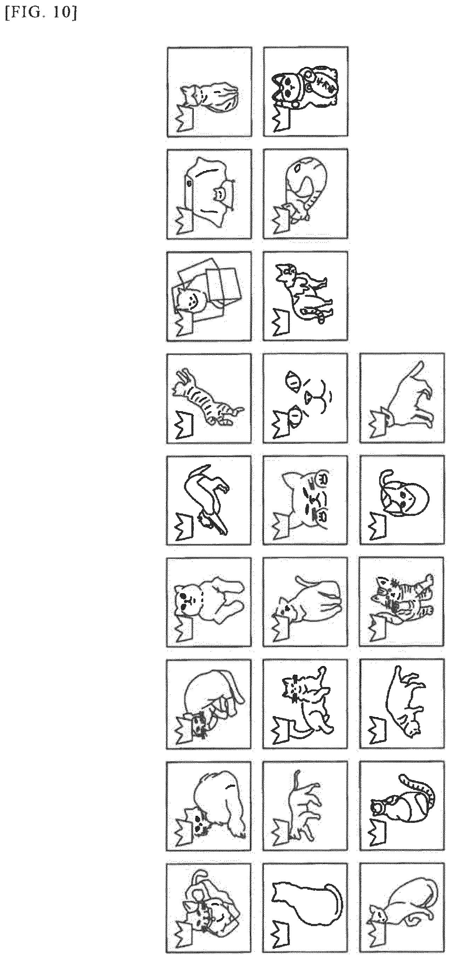

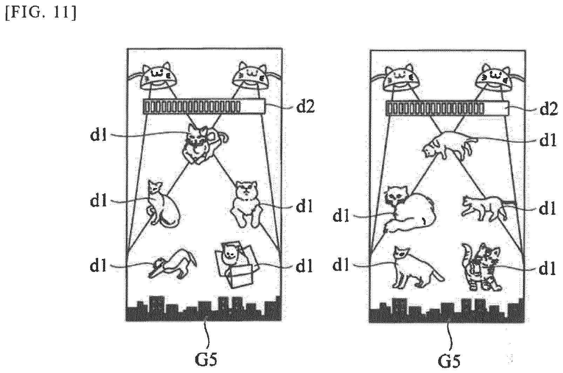

In a five-choice game of "the room of cats", the server 13 randomly selects five images from 24 relevant images (see FIG. 10), and randomly determines the appearance positions of the selected five images. The five images appear at fixed positions: the bottom right, bottom left, middle right, middle left and top. The selected five images are randomly assigned to these fixed positions. Accordingly, the displayed images themselves may be different in each game as shown in FIG. 11; or the five selected images may be the same, but the appearance positions thereof are different. The five images selected have no relevance to each other except for the relevance in the category of "cats". The server 13 also determines a background image to be used. The server 13 transmits information such as the numbers identifying the determined five images to each terminal 11 together with information about their positions to be displayed. The terminal 11 generates the game screen G5 based on the acquired information. FIG. 11 shows thus generated and displayed exemplary game screens G5 of a five-choice game.

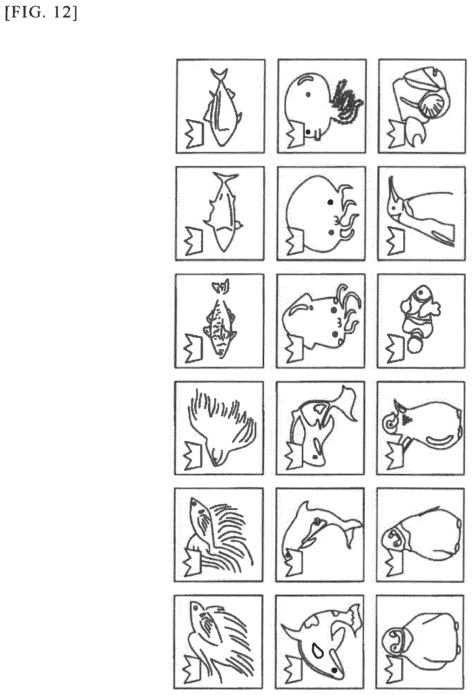

In the three-choice games of the embodiment described above, three relevant images are fixed as a group as in "the room of animals", and the images of the choices are set on the group basis. However, the categories of the groups are not limited to animals. It is preferable to prepare various categories for games such as a game "the room of the sea" using marine creatures as shown in FIG. 12, for example. As another alternative, the 24 images dedicated for the five-choice game "the room of cats" described above may be used for the three-choice games. The three-choice games may consist of three images randomly selected from the 24 images, for example. Similarly, the five-choice games may employ a different way of selecting five images. Specifically, instead of randomly selecting five images from a predetermined number of images (e.g., 24 images) as in the above-described embodiment, a plurality of groups each consisting of predetermined five images may be prepared and one group may be selected for each game. However, in the case of the three-choice games, since it is preferable to combine two similar images with one different image, the three images to be concurrently displayed in a game are preferably fixed on the group-by-group basis and one group is selected for each game. In the case of the five-choice games where each game has many choices, i.e., five choices, it is difficult to make a specific image noticeable. Namely, even if two images are similar, it is difficult to distinguish a specific image unless the remaining three images are similar to each other. On the other hand, if four images are set to be similar to each other to distinguish the remaining image, the game may be less interesting. Therefore, it is preferable to employ the method of selecting five images from a large number of images to produce combinations including a variety of images, and the degree of possibilities of being selected may vary depending on the correlation between the images appearing at the same time.

### [Hard Mode]

When the hard mode is selected, the terminal 11 and the server 13 transmit data to each other and execute the flow chart shown in FIG. 11 to proceed the game. FIG. 12 is a state transition diagram showing screens displayed on the display 16 of the terminal 11 as the game progresses.

The hard mode is a nine-choice game for playing by predicting a least selected numeral from nine numerals. Unlike the easy mode, the nine numerals of the choices are the numerals from 1 to 9, which is fixed. The alignment of the numerals is also fixed so as to be the same for all terminals.

Unlike the easy mode games, the hard mode games (i.e., numbers games) do not wait for participants. The server 13 hosts hard mode games periodically (e.g., per minute) and determines the win or loss of the game based on the number of votes casted during a voting period. Specifically, in this numbers game, when the voting period of, e.g., one minute ends, the server aggregates the votes casted during the voting period to determines the win or loss. After the aggregation/determination process is completed, a next voting period starts. Participants view reference information about the game during the one-minute voting period, determine a numeral to vote, and vote on it. If the time is up, participants can vote in a next voting cycle. The server then aggregates the votes from the participants who participated during the one-minute voting period to determine the winner.

The winner is determined in the same manner as in the easy mode. The number of votes is calculated for each of the nine numerals. When a numeral obtained one vote, such voter is the winner. When several numerals each have one vote, all such voters are the winners. When no numeral obtained one vote, participants who voted on a numeral that obtained fewest votes are the winners. Similarly to the easy mode, when no numeral obtained one vote and a numeral obtained no vote, all the participants lose the game. One voting consumes, for example, three coins from the coins owned by a participant. If the participant wins the game, the participant gets coins bet on the voting. When there is a plurality of winners, the total number of bet coins are equally divided among the winners. In order to carry out a hard mode game, the terminal and the server execute the following processing.

A user selects the hard mode (i.e., a room of the numbers game) on the game mode selection screen (S21). When the terminal 11 detects that the hard mode has been selected, the terminal 11 accesses the server 13 and notifies it of the fact that the hard mode is selected and identifiable information of the user (viewer).

In addition to the notification about the user's participation in the game, the terminal 11 displays the hard mode top screen G11 on the display 16. The hard mode top screen G11 includes a start button k1. When the start button k1 is tapped, the terminal 11 displays a game screen G12 of the hard mode. The hard mode top screen G11 also includes a mode switch button k2 in the vicinity of an upper end of the display screen. When the mode switch button k2 is tapped, the terminal 11 switches the game mode to play and displays the easy mode top screen G3 on the display 16 (see FIG. 4).

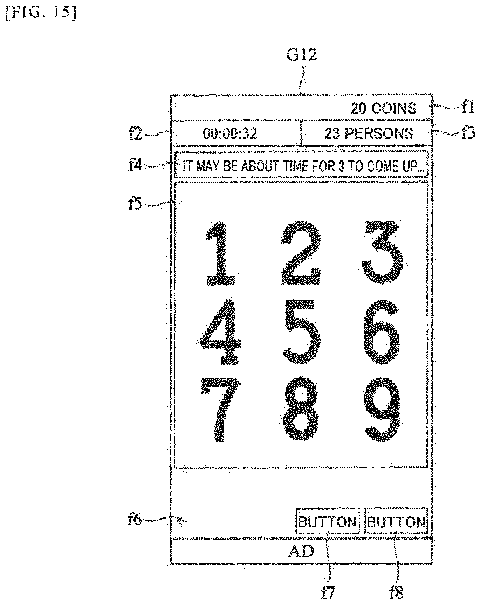

As shown in an enlarged manner in FIG. 15, the game screen G12 includes a display section for the number of coins owned by the user f1 at an upper right end. Below the display section for the number of coins f1, a time limit display section f2 for displaying information about the remaining time of a voting time is provided on the left side; and a display section for the number of participants f3 for displaying information about the number of participants in the ongoing game is provided on the right side. Below the time limit display section f2 and the display section for the number of participants f3, an analysis result display section f4 is provided.

Further below the analysis result display section f4, a numeral selection screen & information display section f5 is provided in a large area at the center of the game screen G12. The numeral selection screen & information display section f5 is for selecting one numeral that the user predicts will be least selected and voting on it. The numeral selection screen & information display section f5 includes the numerals from 1 to 9 aligned in a layout of 3 × 3. The user taps a desired numeral to vote on it.

The game screen G12 includes button areas for transition of screens on the lower side. In this example, a back button f6 is provided at the left end; a trend information display button f7 is provided at a position slightly deviated to the right from the middle; and a bingo sheet button f8 is provided at the right end. When the back button f6 is tapped, the screen returns to the game mode selection screen for selecting the easy mode or the hard mode. Tapping on the trend information display button 17 displays a predetermined trend information display screen G13. Tapping on the bingo sheet button f8 displays a bingo sheet display screen G14. Details of a function for displaying trend information of a game based on the trend information display screen G13 and a function for playing bingo based on the bingo sheet display screen G14 will be described later.

When the server 13 receives a notification that the viewer has selected the hard mode from the terminal 11, the server 13 saves data about the viewer (S22). Namely, the server 13 registers the viewer in a list of users (i.e., viewers) who are viewing the currently ongoing game. When the information sent from the terminal 11 is insufficient, the processor 22 of the server 13 accesses the user database 23 based on the identifiable information to acquire necessary data and saves the acquired data in association with the registered viewer.

The terminal 11 outputs attribute data of the viewers acquired from the server 13 using, for example, the game screen G12 or a screen transitioned from the game screen G12 (S23). Specifically, the terminal 11 displays the number of coins that the terminal 11 itself owns on the display section for the number of coins f1; and the number of viewers participating in the currently ongoing game on the display section for the number of participants f3, for example. In addition, the terminal 11 acquires the time limit (the remaining time) of the currently ongoing game from the server 13 when notifying the participation in the game, and displays the acquired remaining time in the time limit display section f2. After acquiring the time limit at the time of participation, the terminal 11 calculates the remaining time using an internal clock, a counter or the like to update the indication in the time limit display section f2. For example, when the official time limit (the remaining time) controlled by the server 13 is updated, the terminal 11 detects the update and renews the limit time on the terminal 11 side to the most recent one. However, if the number of terminals 11 increases, too many terminals 11 may access the server at the same time. Hence, since the game cycle is one minute so that the time limit is short, the time limit may preferably be managed on the terminal 11 side.

The server 13 also acquires the trend information of the past games (S24), and transmits the acquired game trend information to the terminal 11 (S25). The game trend information is useful in determining a numeral to vote. For example, the game trend information may include trend data about the voting in the recent games or data about the persons (viewers) who are currently in the numbers game room. Details thereof will be described later.

When the terminal 11 receives the game trend information sent from the server 13, the terminal 11 stores it in the storage 19 (S26). The terminal 11 then outputs the stored trend information (S27). This output process of the trend information is performed in a manner that if the user taps a button provided on the terminal 11, the terminal 11 changes the content of the display based on the tap (S28). A specific example of the actual output process of the trend information performed in accordance with the instruction from the user will be described later.

Further, a more detailed analysis is conducted on the games to display analysis information (S29). In this analysis process, analyses (tweets) may be conducted based on the recent data to recognize the trends that can be elements the user (viewer) takes into his/her consideration. For example, the analyzed trends may be information about frequently winning choices or consecutively winning choices. The terminal 11 displays the analysis result in an analysis result display section f4. Several analysis result display section f4 may be displayed to concurrently display a plurality of analysis results, for example. However, if such a large amount of information is displayed concurrently, the user may not grasp all the information accurately since the time limit is short. Accordingly, it is preferable to provide only one analysis result display section f4 as in the present embodiment.

Specific methods of the trend analysis may include the following. For example, the results of the past n games are aggregated to display the least selected choice. An example of the display may be "It appears a few people select XYZ today". Alternatively, the results of the past n games are aggregated to display the most selected choice. An example of the display may be "It appears many people select XYZ today". As another alternative, if the same choice won consecutively, such choice is displayed. An example of the display may be "XYZ consecutively won earlier". As another alternative, the choice that won a large number of coins may be displayed. An example of the display may be "A person who selected XYZ won the highest prize of xxx coins today".

The server 13 specifies what kind of analysis to be conducted using which data and informs the terminal 11 of it when the terminal 11 acquires the trend information from the server 13. Such specification is the same for all the terminals 11. Accordingly, the analysis process is conducted by individual terminals 11, but the content to be displayed on the terminals 11 is the same for all users. Further, concrete conditions of each trend analysis are randomly determined, but the content to be displayed in the analysis result display section f4 is uniquely defined per game.

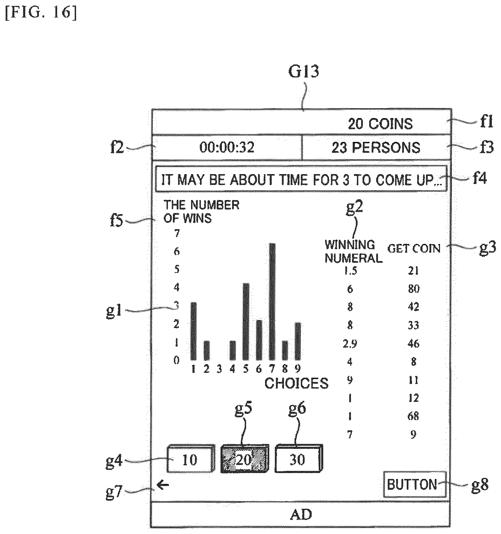

The processing of S 27 and S28 may be performed as follows. For example, when the user taps the trend information display button f7 on the game screen G12, the terminal 11 detects the tap and displays the trend information display screen G13 as shown in FIG. 16 in an enlarged manner. The trend information display screen G13 uses the game screen G12 as the basis to display the most recent game trend data (STATS) instead of the information to be displayed in the numeral selection screen & information display section f5.

The information displayed in the numeral selection screen & information display section f5 is as follows. A first area g1 on the left half of the screen f5 displays a graph indicating the number of wins of each choice from 1 to 9. A second area g2 on the left side of the right half of the screen f5 displays a history of the winning choice (with the latest at the top). A third area g3 on the right side of the right half of the screen f5 displays the number of coins the winner got in each game (with the latest at the top). The data shown in the graph in the first area g1 is based on the most recent N games, and the terminal 11 switches the graph data at the time of tapping on a first button g4, a second button g5, or a third button g6. In this embodiment, when the first button g4 is tapped, the terminal 11 updates the graph to the trend data of the most recent 10 games; when the second button g5 is tapped, the terminal 11 updates the graph to the trend data of the most recent 20 games; and when the third button g6 is tapped, the terminal 11 updates the graph to the trend data of the most recent 30 games. The first button g4, the second button g5, or the third button g6 that the user tapped last is displayed in a color different from the other two buttons. In FIG. 16, the second button g5 is tapped, and only the second button g5 is displayed in a predetermined color. Accordingly, from which button is displayed in such predetermined color, the user can know at a glance on how many games the graph displayed in the first area g1 is based.

Thus, by checking the data about the most recent winning numerals, it is possible to know numerals that the currently participating players are likely to select or numerals that the currently participating players are less likely to select (i.e., numerals that are likely to win). The players usually participate in a plurality of games consecutively rather than participating only once. Hence, the users can understand the trends of the currently participating users by checking the most recent data.

Although the present embodiment displays the data about the least selected numerals such as the winning numerals or the number of times that each numeral won the games, the configuration is not limited thereto. The server may preferably have a function for acquiring the number of votes that each viewer has cast on each numeral in the past (i.e., in the latest N games or in the entire period) as the data about the viewers; and aggregating them to display the total number of votes cast by all participative viewers on each numeral. This configuration can preferably indicate the trends on which numerals the viewers of the ongoing game are likely to vote.

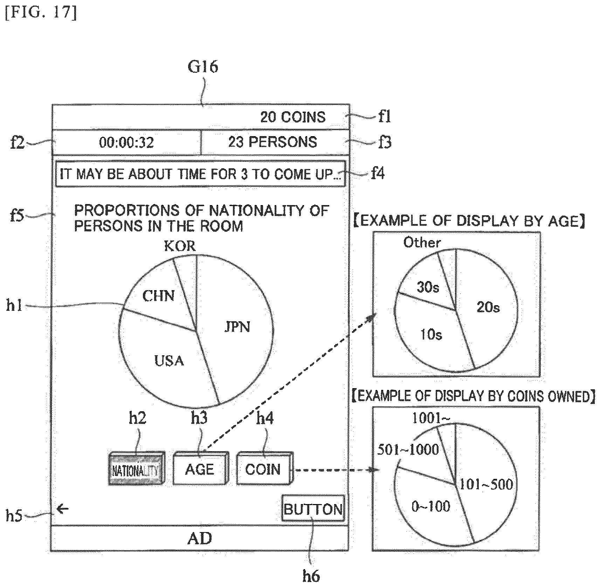

The screen also includes a back button g7 at a lower left end; and a screen switch button g8 at a lower right end. When the back button g7 is tapped, the display returns to the game screen G12, which is in the hierarchy one level up. When the screen switch button g8 is tapped, the terminal 11 detects the tap and displays a viewer data display screen G16 shown in Fig. 17. The viewer data display screen G16 uses the game screen G12 as the basis to display viewers' data (PLAYER) instead of the information to be displayed in the numeral selection screen & information display section f5.

The numeral selection screen & information display section f5 displays a pie chart h1 on the upper side for indicating the proportions in predetermined data about the viewers; and selection buttons on the lower side for specifying the content of the information to be displayed. The selection buttons include a first selection button h2 for displaying the nationalities, a second selection button h3 for displaying the ages, and a third selection button h4 for displaying information about the coins. When the first selection button h2 is tapped, the terminal 11 switches to display data about the proportions of the nationalities of those currently in the game room. When the second selection button h3 is tapped, the terminal 11 switches to display data about the proportions of the ages of those currently in the game room. When the third selection button h3 is tapped, the terminal 11 switches to display proportion data based on the number of coins owned by those currently in the game room.

The first selection button h2, the second selection button h3, or the third selection button h4 that the user lastly tapped is displayed in a color different from the other two buttons. In FIG. 17, the first selection button h2 is tapped, and only the first selection button h2 is displayed in a predetermined color. Accordingly, from which button is displayed in such predetermined color, the user can know at a glance which type of proportion data the pie chart indicates.

The screen also includes a back button g5 at a lower left end; and a screen switch button h6 at a lower right end. When the back button h4 is tapped, the display returns to the game screen G12, which is in the hierarchy one level up. When the screen switch button h6 is tapped, the terminal 11 detects the tap and displays a trend information display screen G13 shown in FIG. 16.

The server updates the viewer data and the trend information each time a new user participates in the game, and the data displayed on the numeral selection screen & information display section f5 described above is switched to the latest information in real time in accordance with a change in the viewers.

Displaying the data about the viewers as described above can provide the following advantages. For example, displaying the nationalities allows participants to use the nationality data as a hint to image a numeral which is likely to be selected or a number which is unlikely to be selected. The participants can determine a numeral to vote based on the imagination. Displaying the nationalities also allows participants to feel being connected to the world through the game room.

The more coins a participant owns, the participant may be a stronger game player. Accordingly, displaying the number of coins allows participants to judge that many strong participants are in the game based on the high proportion of the viewers having many coins so as to make a choice not to vote in the ongoing game.

In addition, displaying the ages allows participants to outsmart by voting on a choice different from the choice that the participant would normally select if many participants are close in age to the participant. Further, displaying the ages, gender or the like allows participants to know the types of the participants, so that the participant may feel an affinity with other participants or may feel happy. If a participant is young and many of the other participants are older than him/her, the participant may feel more pleased if the participant wins the game. Thus, participants can be more motivated to vote. In this manner, the data relating to the viewers can effectively function as information used when determining a numeral to vote and as information for enjoying the game.

A user switches the screens to display each data to consider and analyze it, and votes within the time limit (S30, S31). The voting is carried out by tapping on an area where the numerals are displayed on the numeral selection screen & information display section f5. When a tap is made on the numeral selection screen & information display section f5 in the state where the numerals are displayed in the numeral selection screen & information display section f5, the terminal 11 identifies the selected numeral based on the tapped position and sends it to the server 13. In the games of the hard mode, only one voting finalizes the selection of choice. In other words, re-voting as in the easy mode is not allowed in the hard mode.

The server 13 acquires and saves the choice sent from the terminal 11 (S32). At this time, a predetermined number of coins (e.g., three coins) are consumed for playing the game. The server 13 judges whether the number of choices sent thereto, i.e., the number of votes satisfies the minimum number of votes (S33).

If a participant entered the game room but did not tap to select a choice, no selection information occurs, so that the terminal 11 sends no selection information. Accordingly, the number of actual voters may be smaller than the number of viewers. If the number of actual voters does not reach the minimum number of votes (No in S33), this game is not established, and the time limit is extended. The extended time is the same in length as the time limit of the game. For example, if the time limit is one minute and the number of votes is smaller than the minimum number of votes at the end of the one minute, the time limit is extended by one minute. There is no limit on the number of times of extensions. In this arrangement, once a participant votes on a game, the game will be definitely carried out. Thus, if the minimum number of participants is not satisfied, the voting period is extended by one minute. If a participant has already voted, such voting is final, so that the participant cannot re-vote during the extended voting period.

On the other hand, if the number of actual voters satisfies the minimum number of votes, the server 13 judges the game based on the number of votes on each numeral (S34). Then, the server 13 writes the result of the game in the user database (S35). Specifically, if only one user voted on a choice (i.e., a numeral), the server 13 determines that this user is the winner. If a plurality of choices (numerals) each obtained one vote, all the users who voted on these choices (numerals) are the winners. If any choice (numeral) obtained no vote, no winner occurs. If all the choices (numerals) obtained a plurality of votes, the winners are the users who selected a choice (numeral) that obtained fewest votes.

The server 13 writes the determination result of the game in the database (S35), and distributes coins to the winner(s) based on the winner determination result (including the determination of "no winner"). Specifically, the coins are added to the number of coins owned by each winning user in the user database 23 (S36). The coins bet by all participants in the game is divided by the number of winners to be equally distributed to the winners. Specifically, the total number of coins bet by the participants is divided by the number of winners, and the winners each receive the number of coins equal to the quotient (which is an integer) while the server (i.e., the administrator) obtains the rest of the coins, which is the number of coins equal to the remainder of the division.

The server 13 also sends the result of the game to the terminals 11. When each terminal 11 acquires the result of the game from the server 13, the terminal 11 displays the game result on a result screen G15 after a predetermined procedure (S38). The result screen G15 has a layout where a winner's prize display section i1 is disposed on the upper side, a voting result display section i2 is disposed at a middle position, and an operation button i3 is disposed on the lower side. In the case of the winning user's terminal 11, the number of coins that the user obtained (i.e., 51 coins in this example) is displayed in the winner's prize display section i1. In the case of the losing user's terminal 11, the processor displays in the winner's prize display section i1 a notification to the effect that no winnings were given.

The voting result display section i2 displays the numerals (i.e., the choices) in line as well as the number of votes above each numeral (a bar chart including values in this example), so that the users can visually understand the winner's choice more easily. For example, the bar of the winning numeral is displayed in a different color so as to make it visually easily understandable.

In the present embodiment, the operation button i3 comprises two buttons. When a "Close" button on the right is tapped, the result screen G15 is closed to return to the game screen G12. In other words, the "Close" button is for playing the same game once more.

In the present embodiment, the numbers games in the hard mode are held repeatedly every minute. Hence, in a period when the result screen G15 is displayed, the next cycle of the game has started and the time limit gradually decreases every moment. Accordingly, the continuously participating users may have a demand for effectively using the time limit of one minute to consider the various kinds of data to determine a numeral to vote.

Accordingly, although the result screen G15 may be forcibly displayed when the result comes out, the present embodiment has a configuration in which the users who participated in the previous game receive a notification to the effect that the aggregation is complete at the time when such aggregation ended. For example, while a user participating in the next game is viewing the game screen G12 or a data screen to check the stats etc., such notification message may cut in to be displayed on the screen in a partially overlapping manner. The user may confirm the result in accordance with the notification message, or may vote in the next game without seeing the result. If the user continues to play games without seeing the result, a plurality of results may accumulate unopened.

The result may be checked by tapping the notification message, for example. When the notification message is tapped, the terminal 11 displays a corresponding result screen. In this embodiment, it is preferred that the number of coins owned by a user who won a game is reflected only after the user opens the result notification to view the result screen G15. Specifically, the coins for participation (i.e., three coins) are subtracted from the number of coins owned by the user when the user votes. Even if the user wins the game, the number of coins remains the same unless the user opens the result notification. This arrangement can preferably induce users to view the result of the game. Namely, a user who owns many coins may continue a game without seeing the result notification in order to effectively use the voting time of one minute in a game repeatedly started every minute, but the user needs to see the result in order to actually get the winnings coins and reflect it in the number of coins the user owns. As described above, in the present embodiment, the number of coins is decreased and increased at the times of voting and viewing the result, respectively.

In order to increase or decrease the number of coins the user owns, the writing in the database performed in the processing step S36 may be arranged such that: the winnings coins may be managed by referring them as provisionally obtained coins or upcoming coins separately from the number of coins the winner owns; and such winnings coins may be added to the number of coins the winner owns provided that the server receives the notification that the user has viewed the result.

### (Bingo function)

In addition to the basic functions described above, a function for playing bingo may be provided. In the bingo function of the present embodiment, each user has a bingo sheet. If a user wins a game with a numeral selected by the user, the user captures that numeral of the bingo sheet. In the case that the user wins a game with a numeral that the user has already captured on the bingo sheet, such win will not bring any change on the sheet or will not return the numeral to the original state. The bingo function may include a function for giving a bonus to a winner, by which the winner can get more coins at the time of win if the user's bingo sheet satisfies a predetermined condition.

The user can check his/her bingo sheet by tapping a bingo sheet button f8 on the game screen G12. Specifically, when the user taps the bingo sheet button f8, the terminal 11 detects the tap and superimposedly displays a bingo sheet display screen G14 as shown in an enlarged manner in FIG. 18. In the bingo sheet display screen G14, the square of a numeral selected at the time of win is painted in a different color (e.g., red). FIG. 18 shows an example where the user selected "1" and won the game. The alignment of numerals on the bingo sheet may not be the same as that on the numeral selection screen & information display section f5, but is the same for all users. The bingo sheet display screen G14 includes an OK button j1 on the lower side. When this OK button j1 is tapped, the bingo sheet display screen G14 is closed, and the game screen G12 appears.

It is preferable to provide a plurality of predetermined conditions for increasing the number of coins given at the time of win so as to make the games more excited. As an exemplary predetermined condition, a user gets n times more coins when the user gets the last square in a horizontal, vertical, or diagonal row as in ordinary bingo games. If m rows are completed at the same time, the user can get m × n times, n^m times, or m^n times more coins, for example. Such arrangement allows users to get more coins at the time of win by checking the current state of his/her bingo sheet and selecting a numeral to bet so as to simultaneously complete as many rows as possible (Condition 1).

As another exemplary condition (Condition 2), if a user sequentially wins the games by selecting numerals starting with "1" in order, the user gets m times more coins when the user wins the n-th game. For example, if n = 5, m = 10, and the user has won with 1, 2, 3, 4 in this order, the user gets ten times more coins upon winning a game with "5".

As still another exemplary condition (Condition 3), the user can get n times more coins if the user wins only with all the odd numerals or all the even numerals.

The above-mentioned values of n and m may be changed, but the same condition is applied to all users. The bingo sheet is the same for all users, and a game is held under the same condition. The predetermined conditions, rules or sheets are changed periodically. At that time, the bingo game is also reset, and all previously painted squares are returned to blank. Hence, a predetermined condition needs to be satisfied during a time period when the bingo game is held. Since all users are given the same sheet, many users may be placed in similar thought processes in selecting a choice. This point can be a material for considering the choices.

For example, in the case of the rule of Condition 1 above, if the user wins with "5" after obtaining the numerals other than "5", i.e., 1, 2, 3, 4, 6, 7, 8 and 9, the user simultaneously gets bingo in four rows, i.e., one vertical, one horizontal and the two diagonal rows so that the user can get plenty of coins. On the other hand, since the winner of the game is a user who selected the least selected choice, if many users wish to win with 5, finally winning with 5 may be less possible, so that the users may need tactics. Further, since no change occurs in the bingo sheet when the user wins with the same numeral as the already obtained one, the user checks his/her bingo sheet to select a numeral that he/she has not captured. This may narrow the choices the user can take and reduce the possibility of his/her winning.

The bingo sheet may be updated every certain period of time (e.g., one week in the calendar). In this case, even if no user has got a bingo, the bingo sheet will be replaced with a new one. Also, when any user gets a bingo during the time period, a new bingo card is issued. This second bingo card has the same alignment, but it is preferred that the rules to double the points may be changed.

The bingo sheet is distributed to a user free of charge (free of coins) when the user initially participates in a game during a time period when a bingo game is held. The bingo sheet expires at the end of the time period. In the embodiment described above, all users each possess one bingo card of the same content. However, a plurality of patterns of bingo sheets having different alignments may be prepared and randomly distributed to the users, one bingo card per user. Randomly distributing the various sheets allows the users to have the center squares of different numerals, so that the users' attention does not concentrate on a single numeral, thereby raising the possibility of a high return. However, such distribution decreases the function of the bingo sheets as a material used for consideration and judgement. It is preferred that all users each have a bingo sheet having the same alignment of the numerals.

In the case that bingo sheets having different alignments are distributed, the users may possess a plurality of bingo sheets. In such case of possessing a plurality of sheets, one sheet may be given free of charge, and an additional sheet may be given in exchange for a predetermined number of coins or in consideration of fulfilling a predetermined condition (such as obtaining the nine squares in the previous period of bingo, the number of coins the user got, or being excellent in terms of the number of coins owned). Even when a user possesses a plurality of sheets, it is preferred that the user is allowed to use only one bingo sheet in one game. Limiting the number of sheets to one reduces a sense of unfairness in relation to the users having only one sheet. In addition, if a user possesses a plurality of sheets, the user can change the sheets appropriately in accordance with the numerals that are likely to win, so that such user can expect a high return at the time of win.

The display section for the number of participants f3 is arranged to show the number of viewers in the game room, but it may display the number of actual voters instead of or together with the number of viewers in the game room. Knowing the number of actual voters, users can judge the ease of winning and foresee the number of coins that the user may get upon winning the game, so that the user can judge whether to vote.

Although the bingo function is implemented in the numbers games of the hard mode in the example above, the bingo function may not necessarily be provided. The bingo function may be implemented in the easy mode. Exemplary ways of implementation in the easy mode are as follows. In the case that images of choices are selected on the group-by-group basis like the room of animals for example, an image selected by a user is recorded when the user wins, and the user can get coins (e.g., 5 coins) if the user wins with all the images belonging to the same group. In the case that a predetermined number of images are randomly selected from a plurality of images (e.g., 24 images) like the room of cats for example, the user can get coins (e.g., 5 coins) if the number of winning images reaches a predetermined number (e.g., 5 images, 10 images etc.).

### (Variants of common display items)

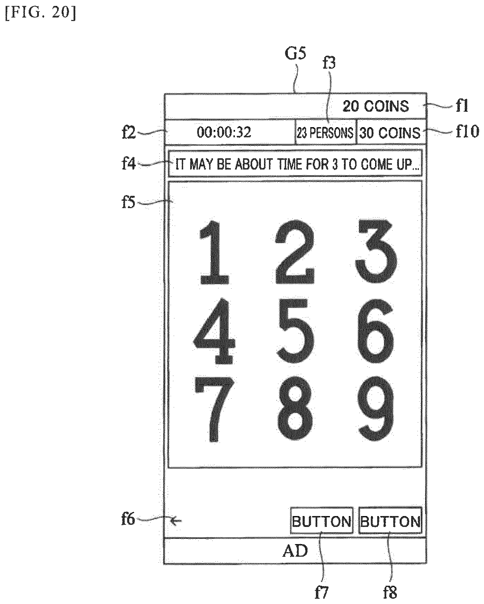

In the above-described embodiment, every screen includes items that are commonly displayed thereon, i.e., the time limit display section f2 positioned on the left side in the second row from the top, the display section for the number of participants f3 positioned on the right side in the second row, etc. These display items can be reference information, i.e., materials for choosing one numeral. In addition to these items, various types of information may preferably be displayed. For example, as shown in FIG. 20, it is preferable to provide a display section for the total number of bets f10 for displaying the current total number of coins bet. Such arrangement preferably enables users to know the current number of participants as well as the number of actual voters (obtained by dividing the total number of bets by 3) and foresee the number of coins that the user can get if he/she wins, thereby motivating the user to vote or serving the user as materials for judging whether to avoid voting.

### (Mode switching function)

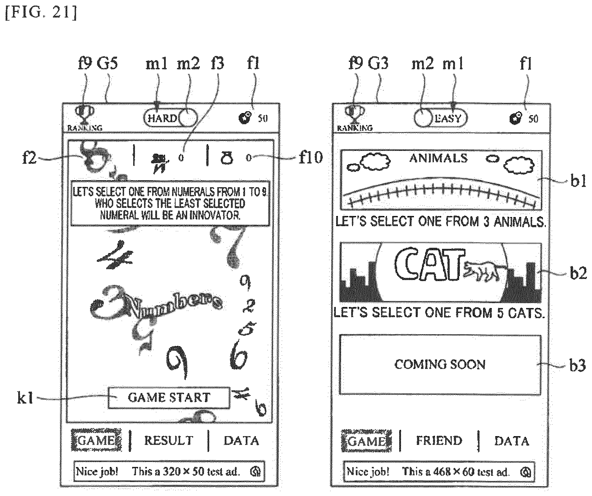

In the embodiment described above, the switching between the easy mode and the hard mode is performed using the tap-type mode switch buttons b4, k2 provided on the easy mode top screen G3 and the hard mode top screen G11, respectively. Alternatively, a slider-type mode switch section m1 may be provided as shown in FIG. 21, so that the user slides a slider m2 right and left to switch the modes.

### (Ranking display function)

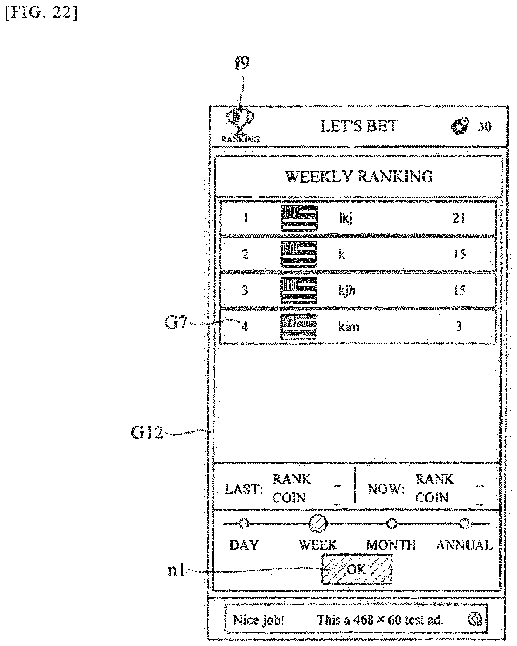

As shown in FIG. 21, it is preferable to provide a ranking button f9 at the upper left end of the display screen of the display as a common display item of the screens in both modes. FIG. 21 exemplifies the ranking button f9 on the easy mode top screen G3 in the easy mode and on the game screen G12 in the hard mode. The ranking button f9 is also displayed on other screens in common. When the ranking button f9 is tapped, the terminal 11 displays a ranking list screen G7 superimposed on the currently displayed screen as shown in FIG. 22. When the OK button n1 is tapped, the terminal 11 closes the ranking list screen G7. As a result, the screen previously displayed under the ranking list screen G7 appears.

This ranking may preferably be for the number of coins owned by the users. The number of coins a user owns is an index showing whether the user is a strong player of the games of the present embodiment, i.e., a person who can think differently from others (an innovator). Other than the total number of coins, the ranking may be determined based on the number of coins that users got within a defined range such as in a day, a week, a month or a certain period of time. This arrangement makes it possible for the users who participated partway through the game to rank high in the ranking.

The number of coins owned may preferably be managed by distinguishing coins for betting to be paid to participate in a game from coins that the user gets when winning a game. The ranking may preferably be made based on the coins that the user gets on winning a game. For example, users can get coins for betting (first coins) by purchasing them or browsing an advertisement. Accordingly, the coins that the winners get in the embodiment described above are referred to as "scores". For example, in the case that a winner gets 3 coins, it means the winner gets 3 scores. The scores are also managed by the user database 23. Each time a user wins a game and gets scores, such score s are added to the current value of the scores owned by the user to update the value of the scores owned.

In the arrangement where users can get coins by purchasing them, the number of coins owned is the sum of the number of coins obtained by winning games and the number of coins acquired by purchasing them. As a result, the number of coins owned does not simply reflect the strength in the games, and a player who spent plenty of money could appear strong. Such problem can be solved by distinguishing the coins from the scores and displaying a ranking based on the scores. Such ranking can give an index of a strong game player, i.e., a person who can think differently from others (an innovator). The scores may be convertible into the coins at a predetermined rate. Preferably, the conversion rate is not equivalent, and it may be set so as to lower the value of the scores, for example, from 100 scores to 50 coins.

### (Variants of statistics display function)

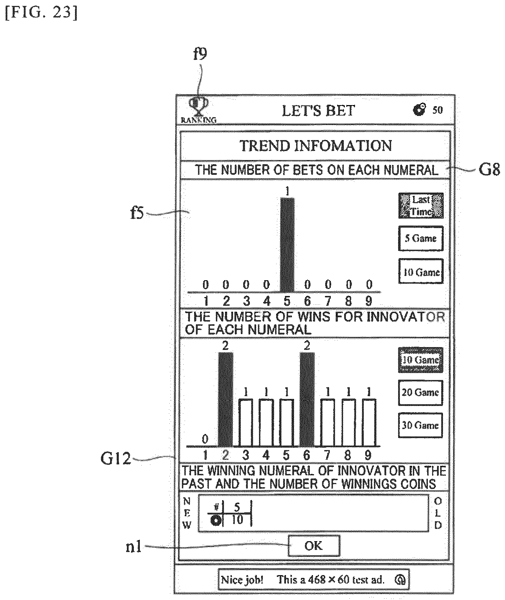

Tapping the trend information display button f7 preferably displays a statistics screen G8 as shown in FIG. 23 in the numeral selection screen & information display section f5 shown in FIG. 15, for example. The example shown has a layout where: a bar chart for indicating how many bets were placed on each numeral in the past is displayed in an upper area of the statistics screen G8; and a bar chart for indicating how many times each numeral has produced an innovator (i.e., a winner) is displayed in a lower area of the statistics screen G8. The bar chart for indicating how many bets were placed on each numeral in the past in the upper area switches its data based on a tap on buttons at the right end to display the information of "Last Time", "the last 5 games" or "the last 10 games". The bar chart for indicating how many times each numeral has produced an innovator (i.e., a winner) in the lower area switches its data based on a tap on buttons at the right end to display the information of "the last 10 games", "the last 10 games" or "the last 30 games". When the OK button n1 is tapped, the terminal 11 closes the ranking list screen G7. As a result, the screen previously displayed under the ranking list screen G7 appears.

### (Variants of the game screen G12 in the hard mode)

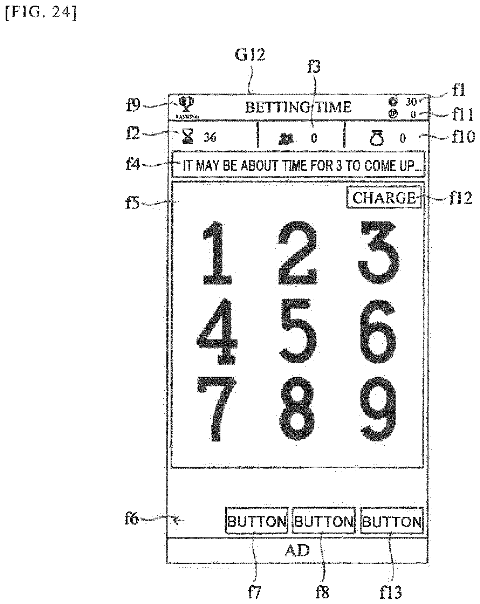

FIG. 24 shows a variant of the game screen G12 in the hard mode for users to bet on numerals. In this variant, the layout is such that a display section for the number of scores f11 is provided under the display section for the number of coins f1. If the function for managing winnings coins (i.e., second coins) in a different unit (e.g., "scores") is provided as in the variant described above, displaying the current number of scores simultaneously as in the present embodiment enables a user to readily check the current number of coins as well as the current number of scores, so that the user can readily understand whether he/she can continue the games by converting scores to coins.

In this variant, a CHARGE button f12 is provided at the top right of the numeral selection screen & information display section f5 (which is above the numeral "3" in this example). The CHARGE button f12 is for a function for users to obtain coins. When the processor 18 detects a tap on the CHARGE button f12, the processor 18 acquires video advertisements via, e.g., the Internet and displays them on the display 16. Preferably, the video advertisements may include advertisements that users can skip in a short period of time (e.g., 5 seconds) and advertisements that users cannot skip so that they must watch for a long period of time (e.g., 30 seconds), and the processor 18 may randomly display those advertisements. The users get three coins for watching one video. Namely, if an advertisement was played to the end (including the case that an advertisement was skipped), the processor 18 notifies the server 13 of the fact and adds coins to the number of coins the user owns. When the server 13 receives the notification, the server 13 updates the user database 23. Then, the processor 18 stops playing video advertisements and displays the game screen G12. As a result, the user (player) can continue to play a game in the hard mode on the same screen.

In particular, such function may preferably be combined with the above-described variant, in which the coins (the second coins) obtained when winning a game is managed in another unit (e.g., "scores"). The distinction between the coins and scores accelerates the consumption of the coins. When the number of coins becomes zero, the player becomes unable to play a game anymore. Hence, the player needs to stop playing; or gain coins by playing games in the easy mode or by viewing advertisements before playing again. By providing the charge button f12, it is possible to easily get coins and continue playing in the hard mode.

The number of coins obtained by viewing the video advertisements may be equal to or larger than the number of coins required to play one hard mode game, i.e., to vote on a numeral. This arrangement enables a user having no coin to play one game by viewing one video.

It is preferred that even a long video has a reproduction time shorter than one voting time, and in particular, time for voting is left for the user even after viewing the long video. This arrangement enables a user who has spent all coins to get three coins by quickly watching an advertisement during the wait time for betting (i.e., voting) on a numeral (e.g., about 50 seconds at the maximum), so that the user can bet in the ongoing game or in the next game at the latest. Therefore, it is preferable to provide a means such as a button which enables an immediate access to an advertisement, e.g., the charge button f12, such that even a player with no coin can still stay in the game and continue playing games.

Further, this variant includes a third button i.e., a player button f13 provided at the bottom right of the screen. When the player button f13 is tapped, the processor 18 detects the tap and accesses the server 13, acquires information about the players who have already finished betting at this time point, and displays those players in a list. In the easy mode, users can check which players are participating in advance since the nicknames of the players in the room are displayed on the participant information screen G4. The player button f13 and the list of the players who have already finished betting are for implementing such function also in the hard mode. Accordingly, users can know which players have already bet in the current game, which is significantly helpful for judging whether to vote or determining a numeral to vote.

The server may consist of a single device or of a plurality of devices to which predetermined functions are distributed as appropriate. The coins may be coins dedicated for use in the games, or may be exchangeable with a virtual currency or even with a regular currency, or may be a regular currency or a virtual currency itself, for example. Further, the term "coin" is used to refer to what a user consumes when playing a game or what a winner obtains in a game in the above-described embodiment, but the term is not limited thereto. The term may be "point" or other words or units, or may be an amount of money. In the case that what a winner obtains is an amount of money or what is convertible to money, the "game" may be referred to as a "casino game", and the "communication game system" may be referred to as an "online casino system", for example.

The above-described embodiment and the like are arranged that a hard mode game consumes three coins for one play (i.e., one voting), and a winner thereof gets a predetermined number of coins. However, the number of coins consumed for one play is not limited to three coins. It may be set appropriately.

In the embodiment described above, the number of coins consumed for one play (i.e., one voting) is the same for all users, but each user may set the number of coins to bet. In this case, the number of coins or the number of scores that a winner obtains may be a value corresponding to the number of coins the winner bet. For example, if a plurality of users won a game, the total number of coins that was bet in the game is distributed to these winners proportionally in accordance with the number of coins that each winner bet in the game. In the case that the minimum number of coins required for voting is set and a winner bet coins exceeding the minimum number of coins, it is preferable that the administrator or the like of the server gives the winner a predetermined number of coins or scores as bonus points besides the coins bet by all the users participating in the game. Various other return methods may also be provided.

In the embodiment described above, the nine numerals are subject to voting and aligned in a 3 × 3 matrix. However, the configuration is not limited to it, and the total number of numerals may be increased. For example, the 16 numerals from 1 to 16 may be aligned in a 4 × 4 matrix, or the 25 numerals from 1 to 25 may be aligned in a 5×5 matrix, and so on. The larger the total number of numerals, the votes may be dispersed on each numeral (i.e., square). This preferably increases a return for a winner.

Furthermore, the bingo function may not necessarily be provided. For example, a game may be configured such that users predict a least selected numeral from a large number of numerals. For example, a user may vote on a numeral that he/she chooses from the numerals from 1 to 100 or from 1 to 1000. Such arrangement increases the number of numerals subject to voting, so that the participants' votes are dispersed. Even if a game has many participants, only one or a few participants win the game and gain a high return.

In order to input such numeral, a button section for inputting numerals such as a numeric keypad may be displayed at a predetermined position on the screen such that a user can input a desired numeral by appropriately touching numerals on the button section. In order to indicate the numeral that the user is inputting, a display section may be provided on the upper side of the button section, e.g., a numeric keypad. The user can see the numeral displayed on the display section to confirm whether he/she has correctly input the numeral of his/her choice to vote. When the terminal detects a touch on an enter button on the screen, the terminal judges that the numeral displayed on the display section is the final vote and sends it to the server.

Various aspects of the present disclosure have been described above with reference to the embodiments and variants. However, these embodiments and descriptions are not intended to limit the scope of the disclosure, but to help the understanding thereof. The scope of the disclosure is not limited to the configurations and manufacturing methods explicitly described herein, and combinations of various aspects of the disclosure herein are also included within the scope. It is to be borne in mind that although the configurations of the present disclosure for which a patent is sought are specified in the appended claims, there is a possibility that configurations disclosed in this specification may also be claimed in the future even if such configurations may not be specified in the current claims.

### Description of Symbols

- 10:: communication game system
- 11:: terminal
- 12:: network
- 13:: server
- 15:: communication interface
- 16:: display
- 17:: input unit
- 18:: processor
- 19:: storage
- 21:: communication interface
- 22:: processor
- 23:: user database
- G1:: registration top screen
- G2:: title screen
- G3:: easy mode top screen
- G4:: participant information screen
- G5:: game screen
- G6:: determination result screen
- G11:: hard mode top screen
- G12:: game screen
- G13:: trend information display screen
- G14:: bingo sheet display screen
- G15:: result screen
- G16:: viewer data display screen

## Claims

1. A communication game system, comprising:
a server; and
a plurality of terminals communicably connected to the server via a network, wherein
each of the terminals includes a function for displaying a plurality of choices on a display of the terminal, and a function for notifying the server of selection information specifying a choice selected from the plurality of choices,
the server includes a function for counting votes on each of the choices based on the selection information sent from the terminals, and determining a winner based on counts of the votes,
the choices are a combination of numerals, and
the server is configured to determine the winner based on the counts of the votes such that: if a choice obtained one vote, the winner is a person who casted the vote; if no choice obtained one vote and a choice obtained no vote, no winner occurs; and if no choice obtained one vote and all the choices obtained two or more votes, the winner is those who voted on a choice that obtained fewest votes.

2. The communication game system according to claim 1, further comprising:
a function for displaying on the terminals information about participants who operate the terminals to participate in a game.

3. The communication game system according to claim 1 or 2, wherein the numerals of the choices are arranged and aligned in a same manner on all the terminals.

4. The communication game system according to any one of claims 1 to 3, wherein the server is configured to perform a process of receiving votes for the choices for a voting period and repeat the process, and count the votes for each voting period to determine the winner.

5. The communication game system according to claim 4, wherein the choices are displayed on the terminals without any change in the combination of the numerals while the server repeats the process of receiving votes for the choices.

6. The communication game system according to any one of claims 1 to 5, further comprising:
a function for playing bingo, wherein
the terminals each possess a bingo sheet in which the numerals are arranged, and
the winner captures upon winning a game a square of the bingo sheet corresponding to a numeral that the winner selected from the choices and receives a bonus upon winning a game when the bingo sheet satisfies a predetermined condition.

7. A storage medium storing a program that, when executed, causes a computer to implement the functions performed in the communication game system according to any one of claims 1 to 6.
